# EUROPEAN PATENT APPLICATION

(11) **EP 4 617 010 A1**
(43) Date of publication of application: **17.09.2025**
(21) Application number: 23888389.6
(22) Date of filing: 03.10.2023
(51) Int. Cl.: B25J 13/08

(54) **TRANSFER SYSTEM, METHOD FOR CONTROLLING TRANSFER SYSTEM, AND CONTROL PROGRAM**

(30) Priority: 08.11.2022 JP 2022179116
(71) Applicant: Daifuku Co., Ltd., Osaka-shi, Osaka 555-0012 (JP)
(72) Inventor: UEDA, Yuichi, Gamo-gun, Shiga 529-1692 (JP); MORIKAWA, Masashi, Gamo-gun, Shiga 529-1692 (JP); TSUKAMOTO, Kunihiro, Gamo-gun, Shiga 529-1692 (JP); MATSUMOTO, Kosuke, Gamo-gun, Shiga 529-1692 (JP)
(74) Representative: Meissner Bolte Partnerschaft mbB
(86) International application number: PCT/JP2023/036000
(87) International publication number: WO 2024/101036

(57) **Abstract**

Provided is a transfer system and the like each of which allows an article to be appropriately held by using a five-axis articulated robot. A transfer system (1) includes: a picking head (12a) which includes a suction part sucking an article (W); a driving part (12b) which includes a turning mechanism (121) which turns the picking head (12a) and a tilting mechanism (122) which tilts the picking head (12a) around a tilting shaft orthogonal to a turning shaft of the turning mechanism (121); and a driving control part (15c) which controls the turning mechanism (121) so as to make a sucked surface of the article (W) and the tilting shaft in parallel with each other.

## Description

### Technical Field

The present invention relates to a transfer system which transfers an article in physical distribution, a method for controlling the transfer system, and a control program.

### Background Art

Conventionally, in distribution warehouses etc., a transfer system including a picking device (transfer device), such as a robot arm, is used so as to efficiently sort a various kinds of many articles into shipment containers according to shipment destinations. In relation to this type of transfer system, Patent Literature 1 discloses a configuration of controlling an articulated robot in accordance with a posture of a work piece detected by image processing.

### Citation List

### [Patent Literature]

[Patent Literature 1]
Japanese Patent Application Publication, Tokukai, No. 2007-245283

### Summary of Invention

### Technical Problem

A six-axis articulated robot is conventionally employed as the picking device. However, in some cases, a five-axis articulated robot (five axes, specifically, axes in X, Y, and Z direction + a turning axis (turning shaft) of a head + a tilting axis (tilting shaft) of the head) which has a simpler structure and which is more easily adaptable to a multi-line conveyor layout may be used as the picking device. In this case, an article needs to be appropriately held by the five-axis articulated robot, with one less axis than the conventional six-axis articulated robot.

An aspect of the present invention has an object to provide a transfer system and the like each of which allows an article to be appropriately held by the five-axis articulated robot.

### Solution to Problem

In order to attain the above object, a transfer system in accordance with an aspect of the present invention includes: a picking head including at least one suction part configured to suck an article; a driving part configured to raise and lower the picking head and to move the picking head in two directions in a plan view, the driving part including a turning mechanism configured to turn the picking head and a tilting mechanism configured to tilt the picking head around a tilting shaft which is orthogonal to a turning shaft of the turning mechanism; a camera part configured to obtain image data of the article; an image processing part configured to detect a posture of the article from the image data; and a driving control part configured to control the driving part, the driving control part being further configured to control the turning mechanism so as to make a sucked surface of the article and the tilting shaft in parallel with each other.

In order to attain the above object, a method, in accordance with another aspect of the present invention, for controlling a transfer system is a method for controlling a transfer system which includes (i) a picking head including at least one suction part configured to suck an article and (ii) a driving part configured to raise and lower the picking head and to move the picking head in two directions in a plan view, the driving part including a turning mechanism configured to turn the picking head and a tilting mechanism configured to tilt the picking head around a tilting shaft which is orthogonal to a turning shaft of the turning mechanism, the method including: an obtaining step of obtaining image data of the article; an image processing step of detecting a posture of the article from the image data; and a control step of controlling the turning mechanism so as to make a sucked surface of the article and the tilting shaft in parallel with each other.

### Advantageous Effects of Invention

In accordance with an aspect of the present invention, it is possible to provide a transfer system and the like each of which allows an article to be appropriately held by the five-axis articulated robot.

### Brief Description of Drawings

Fig. 1 is a perspective view illustrating an overview of a transfer system in accordance with a first embodiment of the present invention.
Fig. 2 is a plan view illustrating an overview of the transfer system.
Fig. 3 is a functional block diagram illustrating an overview of the transfer system.
Fig. 4 is a view schematically illustrating a configuration of a picking head and a driving part.
Fig. 5 is a flowchart illustrating an example of operation of the transfer system.
Fig. 6 is a flowchart illustrating an example of operation in an image processing step, which detects a posture of an article illustrated in Fig. 5.
Fig. 7 is a view illustrating a specific example of a core of a tilting shaft of a transferring part as well as a sucked surface and a rolling axis of an article.
Fig. 8 is a view illustrating a specific example case where among suction parts shown in Fig. 4, two suction parts serving as a specific suction part are caused to suck a sucked surface of an article.
Fig. 9 is a view illustrating a specific example in which the specific suction part is changed.
Fig. 10 is a view illustrating a specific example case where one suction part, serving as the specific suction part, is caused to suck a sucked surface of an article.
Fig. 11 is a view schematically illustrating another specific example of the picking head.

### Description of Embodiments

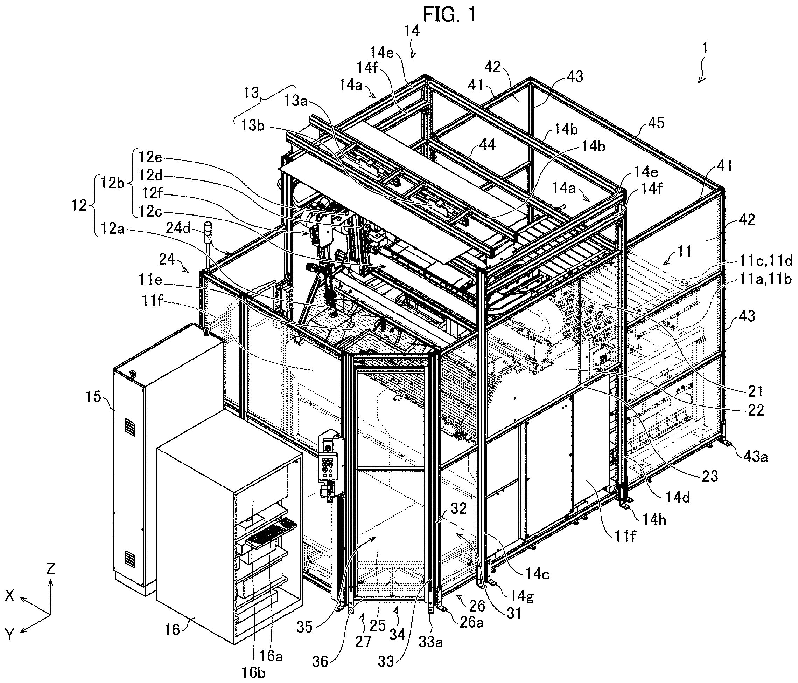

The following description will discuss, with reference to Figs. 1 to 10, an embodiment of the present invention. In an example case explained in the following description, a transfer system is configured such that an article W is transferred from a first container 17 to a second container 18.

### Overview of Transfer System

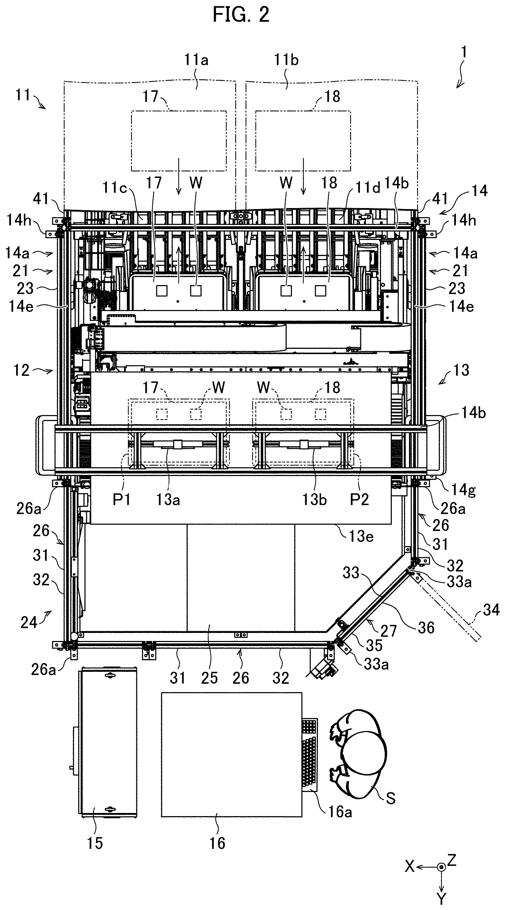

First, the following will discuss an overview of a transfer system 1 with reference to Figs. 1 and 2. Fig. 1 is a perspective view illustrating an overview of the transfer system 1 in accordance with the present embodiment. Fig. 2 is a plan view illustrating an overview of the transfer system 1. The transfer system 1 carries out transferring of an article W in a distribution warehouse or the like. As shown in Figs. 1 and 2, the transfer system 1 in accordance with the present embodiment includes a transporting part 11, a transferring part 12, a camera part 13, a support frame 14, a control part 15, and a terminal part 16.

### Transporting Part

The transporting part 11 transports, in a Y direction (a front-rear direction), a first container 17 and a second container 18 each configured to house an article W therein. To be more specific, the transporting part 11 includes (i) carry-in conveyors 11a and 11b provided on a lower side in a Z direction and (ii) carry-out conveyors 11c and 11d provided on an upper side in the Z direction. By the carry-in conveyors 11a and 11b, the first container 17 and the second container 18 are transported toward a front side in the Y direction. By the carry-out conveyors 11c and 11d, the first container 17 and the second container 18 are transported toward a rear side in the Y direction.

Further, the transporting part 11 includes a moving mechanism 11e and a housing 11f. The moving mechanism 11e causes the first container 17 coming from the carry-in conveyor 11a to be moved to a first transfer position P1 one by one in order, and causes the second container 18 coming from the carry-in conveyor 11b to be moved to a second transfer position P2 one by one in order. Further, the moving mechanism 11e causes the first container 17 positioned at the first transfer position P1 to be moved to the carry-out conveyor 11c one by one in order, and causes the second container 18 positioned at the second transfer position P2 to be moved to the carry-out conveyor 11d one by one in order. The housing 11f houses the moving mechanism 11e therein.

### Transferring Part

The transferring part 12 is provided on a front end (one end) side of the transporting part 11 in the Y direction. The transferring part 12 holds an article W housed in the first container 17 positioned at the first transfer position P1, and transfers the article W to the second container 18 positioned at the second transfer position P2. The transferring part 12 is disposed by a stand and/or the like (not illustrated) at a location which is upward of the moving mechanism 11e and the housing 11f of the transporting part 11 in the Z direction.

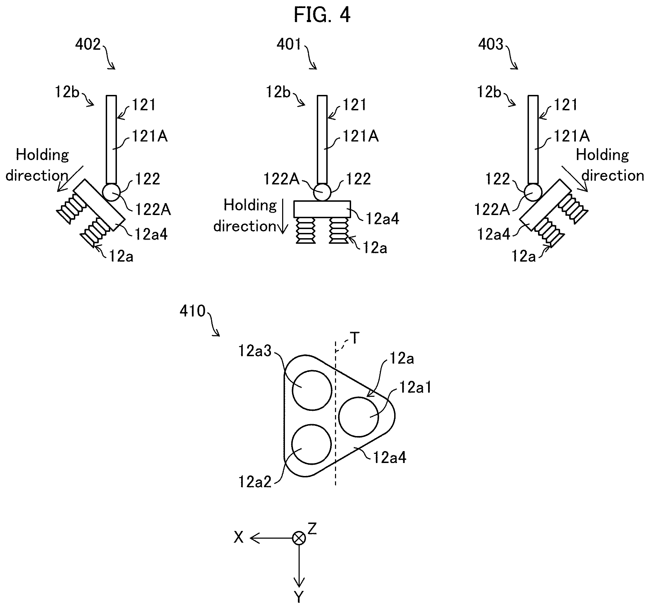

The transferring part 12 includes a picking head 12a which holds the article W and a driving part 12b which raises and lowers the picking head 12a in the Z direction and causes the picking head 12a to move in two directions, specifically, an X direction and the Y direction in a plan view. For example, the picking head 12a includes one or more suction parts configured to suck the article W, e.g., three suction parts, specifically, first suction parts 12a1 to third suction parts 12a3 (Fig. 4). The picking head 12a sucks the article W housed in the first container 17 from above, and holds the article W by hanging the article W.

The driving part 12b includes a fixed rail 12c, a first movable rail 12d, a second movable rail 12e, and a support arm 12f. The fixed rail 12c is provided along the X direction. The first movable rail 12d is provided along the Z direction, and moves in a reciprocating manner along the fixed rail 12c in the X direction. The second movable rail 12e is provided along the Y direction, and moves in a reciprocating manner along the first movable rail 12d in the Z direction.

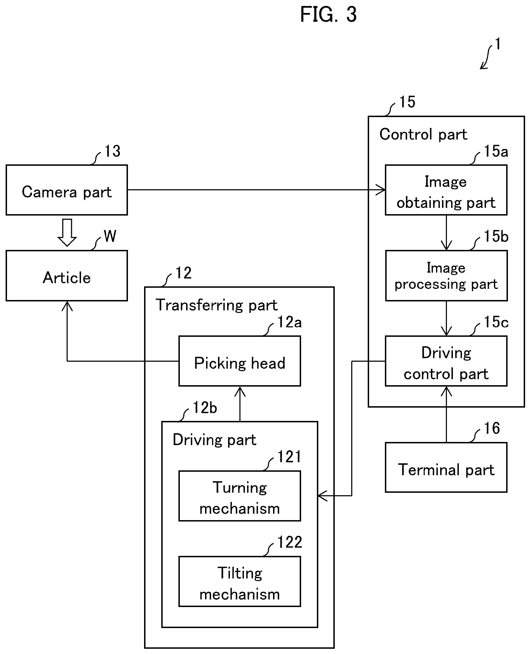

As will be described in detail later, the driving part 12b further includes a turning mechanism 121 (Fig. 3) configured to turn the picking head 12a. The driving part 12b further includes a tilting mechanism 122 (Fig. 4) configured to tilt the picking head 12a around a tilting shaft 122A (Fig. 4), which is orthogonal to a turning shaft 121A (Fig. 4) of the turning mechanism 121. In other words, the transferring part 12 employs a five-axis articulated robot. To be more specific, in the transferring part 12, the driving part 12b is configured to be capable of executing moving operation of causing the picking head 12a to move in the X direction, Y direction, and Z direction, turning operation of turning the picking head 12a by the turning mechanism 121, and tilting operation of tilting the picking head 12a by the tilting mechanism 122.

The support arm 12f is provided along the Z direction, and moves in a reciprocating manner along the second movable rail 12e in the Y direction. Further, the support arm 12f has, on its lower side in the Z direction, the picking head 12a attached thereto. Thus, by controlling operation of the driving part 12b, the transferring part 12 can cause the picking head 12a to move in a reciprocating manner in three directions, specifically, the X, Y, and Z directions.

As discussed above, the transferring part 12 employs a five-axis articulated robot, which has a simpler structure than that of a transferring unit such as a six-axis articulated robot, and thus is easily adaptable to a multi-line conveyor layout. Thus, employment of the transferring part 12 makes it possible to improve a degree of freedom in layout design of the transfer system 1.

### Camera Part

The camera part 13 is disposed above the transferring part 12, and generates a captured image by capturing an image of the article W. The camera part 13 includes a first camera 13a and a second camera 13b. By capturing an image of the first container 17 positioned at the first transfer position P1, the first camera 13a captures an image of one or more articles W housed in the first container 17. By capturing an image of the second container 17 positioned at the second transfer position P2, the second camera 13a captures an image of one or more articles W housed in the second container 18. Note that the camera part 13 may include a light or the like, and each of the first camera 13a and the second camera 13b may capture an image of one or more articles W in a state where the one or more articles W are irradiated with the light or the like with a given intensity of illumination.

### Support Frame

The support frame 14 is a frame body which supports the camera part 13. The support frame 14 includes (i) support parts 14a and 14a that are disposed so as to be adjacent to the transferring part 12 in the X direction (a left-right direction) perpendicular to the Y direction in a plan view and (ii) beam members 14b and 14b that are bridged between the support parts 14a and 14a. The first camera 13a and the second camera 13b are disposed at respective appropriate positions on the beam member 14b that is located on the front side in the Y direction. Note that the number of beam members 14b may be one or three or more.

Each of the support parts 14a and 14a includes two column members 14c and 14d, a girder member 14e, and a reinforcement member 14f. The column members 14c and 14d are arranged in the Y direction, and fixed, by respective fixing members 14g and 14h, to a place in which the transfer system 1 is installed. The girder member 14e and the reinforcement member 14f are bridged between the column members 14c and 14d.

Note that the beam members 14b and 14b may be disposed on the girder member 14e or may be disposed to the column members 14c and 14d, respectively. The support parts 14a and 14a may each include two or more reinforcement members 14f, or the reinforcement member 14f may be omitted. In a case where each of the support parts 14a and 14a is disposed upright by four or more column members, the beam members 14b and 14b may be omitted. In this case, the first camera 13a and the second camera 13b may be disposed at respective appropriate positions on the support parts 14a and 14a.

### Control Part and Terminal Part

The control part 15 controls each part of the transfer system 1, and is constituted by a computer including a Central Processing Unit (CPU) and a memory, for example. Operation of various components is controlled by the computer executing a control program. Details of the control part 15 will be given later.

The terminal part 16 is used by a worker S (Fig. 2) to operate the transfer system 1. The terminal part 16 includes an input part 16a such as a keyboard, a touch panel, and/or a joystick and a display part 16b which displays given information. The control part 15 and the terminal part 16 are examples of a controller of the transfer system 1, and are disposed on a side (a front side in the Y direction) which is outside of a front guard part 24 (described later) and which is opposite to a side on which the transferring part 12 is provided across a work area 25.

To be more specific, the control part 15 is connected, via electric wires (not illustrated), to the transporting part 11, the transferring part 12, the camera part 13, and the terminal part 16. The control part 15 obtains given information such as a state of a motion from each of the transporting part 11 and the transferring part 12, and outputs a given instruction signal such as an instruction signal to each of the transporting part 11 and the transferring part 12. The control part 15 outputs a given instruction signal such as an on/off signal to each of the first camera 13a and the second camera 13b of the camera part 13, and obtains imaging data (captured image data) from each of the first camera 13a and the second camera 13b. The control part 15 receives, from the terminal part 16, an instruction signal and the like that correspond to operation conducted by the worker S, and transmits, to the terminal part 16, information obtained from the transporting part 11, the transferring part 12, and the camera part 13.

### Guard

In the transfer system 1 in accordance with the present embodiment, the transferring part 12 makes a motion in such a manner that the picking head 12a moves in a reciprocating manner in three directions, i.e., the X, Y, and Z directions. Thus, as illustrated in Figs. 1 and 2, a guard for significantly reducing a possibility that the worker S and/or the like may come into contact with the transferring part 12 is provided around the transferring part 12, from the viewpoint of safety. To be more specific, in the present embodiment, as the guard, side guard parts 21, the front guard part 24, and rear guard parts 41 are provided in order from a controller side toward the rear side in the Y direction.

### Side Guard Part

As shown in Figs. 1 and 2, the support parts 14a and 14a include the respective side guard parts 21, which separate the transferring part 12 and an outside area in the X direction from each other. Each of the side guard parts 21 includes a transparent plate 22 and a frame member 23 which holds the transparent plate 22. With this, it is possible to prevent a situation in which a person, including the worker S, enters the inside in the X direction and comes into contact with the transferring part 12. Consequently, it is possible to enhance safety of the transfer system 1.

Furthermore, since the support parts 14a and 14a are provided with the respective side guard parts 21, it is not necessary to additionally provide, to outer sides of the support parts 14a and 14a in the X direction, a guard part for separating the transferring part 12 and the outside area in the X direction from each other. As a result, it is possible to save the space of the transfer system 1.

Incidentally, since the two support parts 14a and 14a are disposed so as to be adjacent to the transferring part 12 in the X direction, the two support parts 14a and 14a are also adjacent to the housing 11f of the transporting part 11, which is located on a lower side of the transferring part 12 in the Z direction. Thus, in the present embodiment, the side guard parts 21 are omitted in lower areas, that is, areas facing the housing 11f, of the support parts 14a. Consequently, it is possible to reduce an area where the side guard parts 21 are provided. Meanwhile, it is possible to prevent, by the housing 11f, the worker S from entering the inside through the lower area of the support part 14a and coming into contact with the transferring part 12. That is, in the lower areas of the support parts 14a, the housing 11f serves as a partition between the transferring part 12 and the outside area in the X direction.

### Front Guard Part

As shown in Figs. 1 and 2, in the transfer system 1, the front guard part 24 is provided such that (i) the work area 25 positioned opposite to the transporting part 11 across the transferring part 12 in a plan view and (ii) an outside area are separated from each other by the front guard part 24. The front guard part 24 is connected to the two support parts 14a and 14a.

The work area 25 is a space where the worker S carries out manual transferring, which is a task of holding and transferring an article W. That is, with the transfer system 1 in accordance with the present embodiment, it is possible to execute both (i) automatic transferring according to which an article W is held and transferred by the transferring part 12 and (ii) manual transferring according to which the worker S enters the work area 25 and an article W is held and transferred by the worker S in the work area 25. The front guard part 24 is provided around the work area 25 so as to be adjacent to the work area 25.

Specifically, the front guard part 24 includes a plurality of fixed-type guard parts 26 and a movable-type guard part 27 which are coupled to each other. Each of the fixed-type guard parts 26 includes a transparent plate 31 and a frame member 32 which holds the transparent plate 31. Corners of the frame member 32 which corners are on a lower side in the Z direction are fixed, by fixing members 26a, to the place where the transfer system 1 is installed. The fixed-type guard parts 26 and 26 located on the rear side in the Y direction are respectively coupled to front sides of the support parts 14a and 14a in the Y direction.

A movable-type guard part 27 constitutes an entry-and-egress door which allows the worker S to enter or exit from the work area 25. The movable-type guard part 27 includes a frame member 33 for fixing and a movable member 34 provided in the frame member 33 for fixing. Corners of the frame member 33 for fixing which corners are on the lower side in the Z direction are fixed, by fixing members 33a, to the place where the transfer system 1 is installed. The movable member 34 is attached to the frame member 33 for fixing via a hinge member (not illustrated) and/or the like in such a manner that the movable member 34 is turnable. The movable member 34 includes a transparent plate 35 and a frame member 36 which holds the transparent plate 35.

With this, it is possible to prevent a situation in which a person, including the worker S, accidentally enters the work area 25 and comes into contact with the transferring part 12. Consequently, it is possible to enhance safety of the transfer system 1. In the above configuration, the front guard part 24 is provided so as to be adjacent to the work area 25. Thus, providing the front guard part 24 makes it possible to prevent or reduce enlargement of the installation space for the transfer system 1.

Note that, in a case where the transfer system 1 is capable of executing only the automatic transferring, the work area 25 may be set as a monitoring area where a monitoring person can monitor the transferring part 12. Alternatively, the work area 25 may be omitted. In this case, the front guard part 24 may be provided on a front side of the transferring part 12 in the Y direction so as to be adjacent to the transferring part 12.

### Rear Guard Part

As shown in Figs. 1 and 2, the transfer system 1 is provided with the rear guard parts 41 and 41 which are adjacent, in the X direction, to the front side of the transporting part 11 in the Y direction and which separate the front side and an outside area in the X direction from each other. Each of the rear guard parts 41 includes a transparent plate 42 and a frame member 43 which holds the transparent plate 42. Front ends of the rear guard parts 41 and 41 in the Y direction are respectively coupled (connected) to rear sides of the support parts 14 and 14 in the Y direction. Corners of the frame member 43 which corners are on a lower side in the Z direction are fixed, by fixing members 43a, to the place where the transfer system 1 is installed. Furthermore, reinforcement members 44 and 45 are provided between the rear guard parts 41 and 41.

With this, it is possible to prevent a situation in which a person, including the worker S, enters the inside from the transporting part 11 and comes into contact with the transferring part 12. Consequently, it is possible to enhance safety of the transfer system 1. Furthermore, in the above configuration, the rear guard parts 41 are provided so as to be adjacent to the transporting part 11. Thus, providing the rear guard parts 41 makes it possible to prevent or reduce enlargement of the installation space for the transfer system 1.

Moreover, the front guard part 24, the side guard parts 21, and the rear guard parts 42 in accordance with the present embodiment include, as substantial guards, the transparent plates 22, 31, 35, and 42. With this, in accordance with the present embodiment, as a monitoring person, the worker S of the transfer system 1 can monitor the transporting part 11 and the transferring part 12 from the outside of the transfer system 1. Note that the transparent plates 22, 31, 35, and 42 may be replaced with guards each of which is in the shape of a fence, a net, or the like.

### Control Blocks of Transfer System

Fig. 3 is a functional block diagram illustrating an overview of the transfer system 1. As shown in Fig. 3, the control section 15 includes an image obtaining part 15a, an image processing part 15b, and a driving control part 15c.

The image obtaining part 15a obtains image data captured by the camera part 13. To be more specific, the image obtaining part 15a obtains image data of the first container 17 which image data is captured by the first camera 13a. Further, the image obtaining part 15a obtains image data of the second container 18 which image data is captured by the second camera 13b. The image obtaining part 15a sends, to the image processing part 15b, the image data having been obtained.

The image processing part 15b carries out given image processing (image recognition process) with respect to the image data, so as to obtain transferring data for causing an article W to be sucked (held) by the picking head 12a and transferring the article W. The image processing part 15b sends, to the driving control part 15c, the data having been obtained. Details of the image processing carried out by the image processing part 15b will be described later.

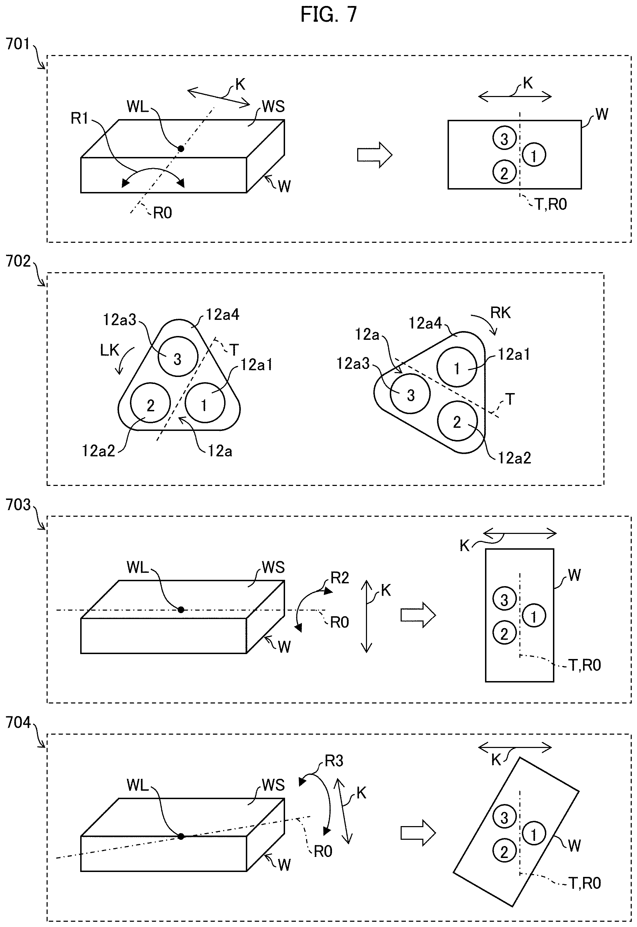

The driving control part 15c controls the transferring part 12 on the basis of a result of the image recognition process which result has been obtained from the image processing part 15b. For example, the driving control part 15c controls the turning mechanism 121 (Fig. 4) so that the tilting shaft 122A (Fig. 4) becomes in parallel with a surface WS (Fig. 7) of the article W which surface is to be sucked (such a surface WS will be referred to as a "sucked surface WS"). Note that details of how the turning mechanism 121 (Fig. 4) and the tilting mechanism 122 (Fig. 4) are controlled by the driving control part 15c will be described later.

### Details of Configuration of Picking Head and Driving Part

Fig. 4 is a view schematically illustrating a configuration of the picking head 12a and the driving part 12b. As illustrated in 401 and 410 of Fig. 4, the picking head 12a includes the first suction part 12a1, the second suction part 12a2, the third suction part 12a3, and a base part 12a4. The driving part 12b includes the turning mechanism 121 and the tilting mechanism 122.

The turning mechanism 121 includes the turning shaft 121A, which is coupled to the picking head 12a via the tilting shaft 122A provided to the tilting mechanism 122 and which is configured to turn the picking head 12a. The turning shaft 121A is coupled to a non-illustrated driving member, such as a motor, which is provided to the support arm 12f. The driving member is configured to operate in accordance with an instruction from the driving control part 15c. With this, in accordance with turning of the turning shaft 121A, the picking head 12a turns in a desired direction via the tilting shaft 122A.

The tilting mechanism 122 includes the tilting shaft 122A, which is orthogonal to the turning shaft 121A of the turning mechanism 121. The tilting shaft 122A has one end coupled to the turning shaft 121A and the other end coupled to the base part 12a4 of the picking head 12a. As illustrated in 401 to 403 of Fig. 4, in accordance with an instruction from the driving control part 15c, the tilting mechanism 122 operates an inclination shaft (not illustrated) which inclines the base part 12a4 in the Z direction, thereby tilting the picking head 12a around the tilting shaft 122A. Consequently, in the picking head 12a, sucking directions of the first suction part 12a1 to the third suction part 12a3, that is, a holding direction of the article W changes as illustrated in 401 to 403 of Fig. 4.

In the picking head 12a, the first suction part 12a1 to the third suction part 12a3 are attached to the base part 12a4 in an integrated manner. As illustrated in 410 of Fig. 4, when the picking head 12a is viewed from the direction of raising and lowering (Z direction), the first suction part 12a1 and the second suction part 12a2 are arranged such that a core T of the tilting shaft 122A is sandwiched between the first suction part 12a1 and the second suction part 12a2. The second suction part 12a2 and the third suction part 12a3 are arranged side by side along a direction in which the core T of the tilting shaft 122A extends.

### Control of Transfer System

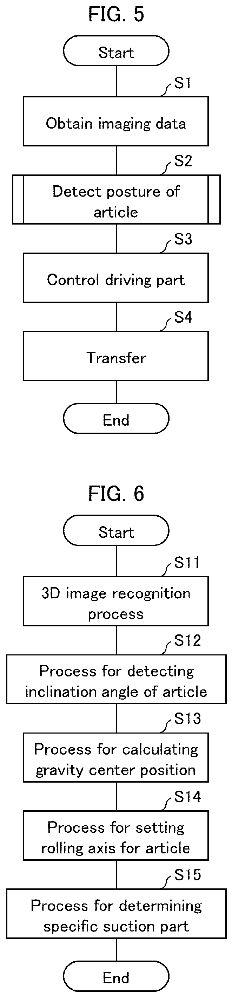

The following description will discuss, with reference to Figs. 5 to 10, control of the transfer system 1. In the transfer system 1, as a basic operation example, the control section 15 controls transfer operation of transferring an article W inside the first container 17 into the second container 18 in such a manner that the control section 15 moves the picking head 12a in a reciprocating manner between the first container 17 and the second container 18 on the basis of a result of image processing carried out with respect to image data captured by the camera part 13.

### Example of Operation of Transfer System

Fig. 5 is a flowchart illustrating an example of detailed operation of the transfer system 1. Fig. 6 is a flowchart illustrating an example of operation of an image processing step, which detects a posture of an article W illustrated in Fig. 5.

In control of the transfer operation of transferring an article W inside the first container 17 into the second container 18, the image obtaining part 15a obtains, as imaging data (captured image data), image data of the first container 17 from the first camera 13a, as indicated by step S1 in Fig. 5. Then, the image obtaining part 15a outputs, to the image processing part 15b, the imaging data having been obtained.

Subsequently, the image processing part 15b carries out given image processing with respect to the image data from the image obtaining part 15a so as to extract the image of the article W housed in the first container 17, and determines a position of the article W in the X direction, Y direction, and Z direction (hereinafter, such a position will be referred to as "XYZ coordinates"). In other words, on the basis of the XYZ coordinates determined from the image data of the first container 17, the image processing part 15b determines the XYZ coordinates of the article W which is housed inside the first container 17 and which is to be transferred.

Then, the image processing part 15b detects a posture of the article W whose XYZ coordinates have been determined (step S2). To be more specific, as indicated by step S11 in Fig. 6, the image processing part 15b executes, for the article W, three-dimensional (3D) image recognition process. As a result, the image processing part 15b obtains and recognizes values of the XYZ coordinates of the article W which is housed inside the first container 17 and which is to be transferred. Since the 3D image recognition process is publicly known, detailed description thereof will be omitted.

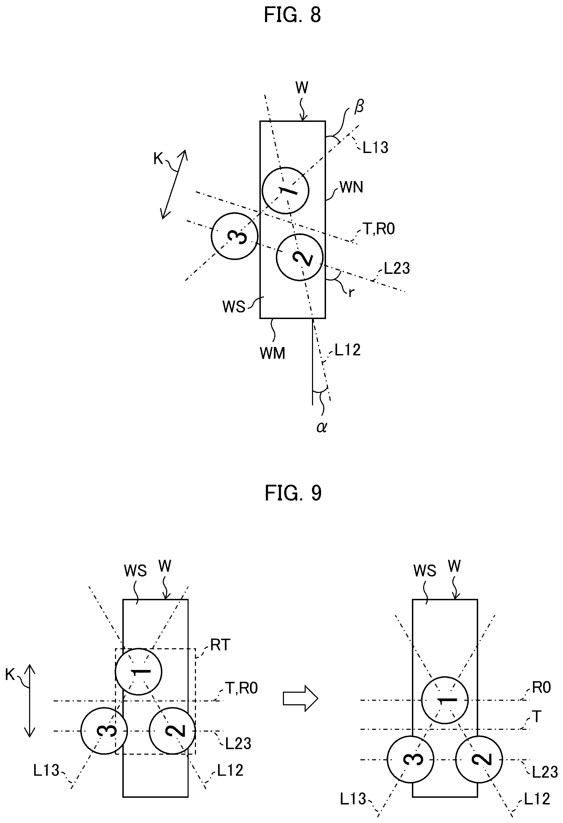

Then, the image processing part 15b detects, on the basis of a result of the 3D image recognition process, inclination angles Rx, Ry, and Rz of the article W with respect to the X direction, Y direction, and Z direction (step S12). Furthermore, the image processing part 15b obtains, by using the values of the inclination angles Rx and Ry having been detected, an inclination direction K (Fig. 8) of the article W.

Subsequently, the image processing part 15b calculates a gravity center position WL (Fig. 7) of the article W or of the sucked surface WS (Fig. 7) of the article W (step S13). To be more specific, the image processing part 15b calculates, by using the values of the XYZ coordinates of the article W having been obtained, a position of the gravity center position WL, that is, values of XYZ coordinates thereof.

Then, the image processing part 15b sets, as a rolling axis R0 (Fig. 7) for the article W, an axis which is orthogonal to the inclination direction K (Fig. 7) thus obtained and which passes through the gravity center position WL (Fig. 7) thus obtained (step S14). Details of how the rolling axis R0 is set for the article W will be described later.

Subsequently, in accordance with the size of the sucked surface WS of the article W, the image processing part 15b determines, from among the first suction part 12a1 to the third suction part 12a3, a specific suction part which is to be caused to suck the sucked surface WS (step S15). As will be described in detail later, the image processing part 15b determines, as the specific suction part, at least one from among the first suction part 12a1 to the third suction part 12a3.

Subsequently, as indicated by step S3 in Fig. 5, the driving control part 15c controls the turning mechanism 121 and the tilting mechanism 122 of the driving part 12b by using data obtained from the image processing part 15b which data includes data related to the specific suction part thus determined. As will be described in detail later, the driving control part 15c controls operation of the turning mechanism 121 and operation of the tilting mechanism 122 by using the data related to the inclination direction K of the article W, the data related to the position of the gravity center position WL, and the data related to the rolling axis R0.

Then, the driving control part 15c transfers the article W by using data related to the second container 18, which is a transfer destination of the article W, the data having been supplied from the image processing part 15b (step S4). To be more specific, the image processing part 15b identifies, on the basis of image data of the second container 18 which image data has been obtained from the second camera 13b, XYZ coordinates of a position of the second container 18 at which position the article W is to be placed. Then, the image processing part 15b sends, to the driving control part 15c, values of the XYZ coordinates of the position at which the article w is to be placed. After causing the picking head 12a to suck and hold the article W, the driving control part 15c transfers the article W thus held into the second container 18, by using the values of the XYZ coordinates of the position at which the article W is to be placed, the values having been supplied from the image processing part 15b.

### Specific Example of Rolling Axis and Tilting Shaft

Fig. 7 is a view illustrating a specific example of the core T of the tilting shaft 122A of the transferring part 12 as well as the sucked surface WS and the rolling axis R0 of the article W. In an example case explained in the following description, the article W has a rectangular parallelepiped shape. In Fig. 7, the first suction part 12a1, the second suction part 12a2, and the third suction part 12a3 are respectively illustrated as "1", "2", and "3" for simplification. The following description will first deal with a case where a size of the sucked surface WS is larger than a sum of suction areas of the first suction part 12a1 to the third suction part 12a3 and thus the image processing part 15b determines the first suction part 12a1 to the third suction part 12a3 as the specific suction part.

### (1) An example case in which three suction parts serve as a specific suction part

As illustrated in the drawing on the left side in 701 of Fig. 7, for example, in a case where the rolling axis R0 passes through the gravity center position WL of the article W, extends so as to be orthogonal to the inclination direction K, and extends along a width direction (shorter direction) of the article W, the sucked surface WS of the article W is inclined in its longitudinal direction, as indicated by the two-headed arrow R1 in the drawing. Then, by using data related to the rolling axis R0 which data has been supplied from the image processing part 15b, the driving control part 15c drives the turning mechanism 121 so as to make the sucked surface WS and the tilting shaft 122A in parallel with each other.

In other words, as illustrated in the drawing on the right side in 701 of Fig. 7, the driving control part 15c controls driving of the turning mechanism 121 for turning so that orientation of the core T of the tilting shaft 122A and orientation of the rolling axis R0 coincide with each other. Further, the driving control part 15c turns the turning mechanism 121 independently of a roll angle, which is a rolling angle of the rolling axis R0 with respect to the Z direction, that is, independently of the inclination angle Rz detected in step S12.

For the operation in which the driving control part 15c makes the orientation of the core T of the tilting shaft 122A and the orientation of the rolling axis R0 coincide with each other, the image processing part 15b controls driving of the turning mechanism 121 for turning so that a turning operation angle of the base part 12a4 of the picking head 12a becomes small.

To be more specific, in a case where the first suction part 12a1 to the third suction part 12a3 are located at the positons shown in the drawing on the left side in 702 of Fig. 7 before the turning mechanism 121 is driven for turning, the image processing part 15b selects counterclockwise turning so that a turning operation angle of the base part 12a4 becomes small. Then, in the operation for making the orientation of the core T of the tilting shaft 122A and the orientation of the rolling axis R0 coincide with each other, the driving control part 15c turns the base part 12a4 as indicated by the arrow LK.

Meanwhile, in a case where the first suction part 12a1 to the third suction part 12a3 are located at the positons shown in the drawing on the right side in 702 of Fig. 7 before the turning mechanism 121 is driven for turning, the image processing part 15b selects clockwise turning so that a turning operation angle of the base part 12a4 becomes small. Then, in the operation for making the orientation of the core T of the tilting shaft 122A and the orientation of the rolling axis R0 coincide with each other, the driving control part 15c turns the base part 12a4 as indicated by the arrow RK.

Further, as indicated by the two-headed arrow R1 in 701 of Fig. 7, in a case where the article W is inclined in its longitudinal direction, among roll angles of the rolling axis R0 with respect to the X direction, Y direction, and Z direction, the roll angle with respect to the X direction is not generated. In other words, the roll angles with respect to the Y direction and Z direction are respectively the inclination angles Ry and Rz detected in step S12, whereas the roll angle with respect to the X direction is 0°, which is equal to the inclination angle Rx detected in step S12. Further, the image processing part 15b outputs the inclination angles Ry and Rz to the driving control part 15c as a tilting angle of the tilting shaft 122A. Thereafter, the driving control part 15c carries out tilting control for the tilting mechanism 122 so that a tilting angle represented by the inclination angles Ry and Rz is attained.

Then, as illustrated in the drawing on the right side in 701 of Fig. 7, in a case where the image processing part 15b determines the first suction part 12a1 to the third suction part 12a3 as the sucked surface which is to be caused to suck the sucked surface WS, the driving control part 15c controls the driving part 12b so that a center position of the first suction part 12a1 to the third suction part 12a3 coincides with the gravity center position WL of the article W. In other words, the driving control part 15c causes a process for sucking the article W by the first suction part 12a1 to the third suction part 12a3 be executed in a state where a center position of the base part 12a4 of the picking head 12a coincides with the gravity center position WL of the article W.

Further, as illustrated in the drawing on the left side in 703 of Fig. 7, for example, in a case where the rolling axis R0 passes through the gravity center position WL of the article W, extends so as to be orthogonal to the inclination direction K, and extends along the longitudinal direction, the sucked surface WS of the article W is inclined in the width direction, as indicated by the two-headed arrow R2 in the drawing. Then, by using the data related to the rolling axis R0 which data has been supplied from the image processing part 15b, the driving control part 15c drives the turning mechanism 121 so as to make the sucked surface WS and the tilting shaft 122A in parallel with each other.

In other words, as illustrated in the drawing on the right side in 703 of Fig. 7, the driving control part 15c controls driving of the turning mechanism 121 for turning so that orientation of the core T of the tilting shaft 122A and orientation of the rolling axis R0 coincide with each other. Further, the driving control part 15c turns the turning mechanism 121 independently of a roll angle, which is a rolling angle of the rolling axis R0 with respect to the Z direction, that is, independently of the inclination angle Rz detected in step S12.

Further, as indicated by the two-headed arrow R2 in 703 of Fig. 7, in a case where the article W is inclined in its width direction, among roll angles of the rolling axis R0 with respect to the X direction, Y direction, and Z direction, the roll angle with respect to the Y direction is not generated. In other words, the roll angles with respect to the X direction and Z direction are respectively the inclination angles Rx and Rz detected in step S12, whereas the roll angle with respect to the Y direction is 0°, which is equal to the inclination angle Ry detected in step S12. Further, the image processing part 15b outputs the inclination angles Rx and Rz to the driving control part 15c as a tilting angle of the tilting shaft 122A. Thereafter, the driving control part 15c carries out tilting control for the tilting mechanism 122 so that a tilting angle represented by the inclination angles Rx and Rz is attained.

Then, as illustrated in the drawing on the right side in 703 of Fig. 7, in a case where the image processing part 15b determines the first suction part 12a1 to the third suction part 12a3 as the sucked surface which is to be caused to suck the sucked surface WS, the driving control part 15c controls the driving part 12b so that a center position of the first suction part 12a1 to the third suction part 12a3 coincides with the gravity center position WL of the article W. In other words, the driving control part 15c causes a process for sucking the article W by the first suction part 12a1 to the third suction part 12a3 to be executed in a state where a center position of the base part 12a4 of the picking head 12a coincides with the gravity center position WL of the article W.

Further, as illustrated in the drawing on the left side in 704 of Fig. 7, for example, in a case where the rolling axis R0 passes through the gravity center position WL of the article W, extends so as to be orthogonal to the inclination direction K, and extends along a diagonal axis inclined with respect to the width direction and the longitudinal direction of the article W, the sucked surface WS of the article W is inclined around the diagonal axis, as indicated by the two-headed arrow R3 in the drawing. Then, by using the data related to the rolling axis R0 which data has been supplied from the image processing part 15b, the driving control part 15c drives the turning mechanism 121 so as to make the sucked surface WS and the tilting shaft 122A in parallel with each other.

In other words, as illustrated in the drawing on the right side in 704 of Fig. 7, the driving control part 15c controls driving of the turning mechanism 121 for turning so that orientation of the core T of the tilting shaft 122A and orientation of the rolling axis R0 coincide with each other. Further, the driving control part 15c turns the turning mechanism 121 independently of a roll angle, which is a rolling angle of the rolling axis R0 with respect to the Z direction, that is, independently of the inclination angle Rz detected in step S12.

Further, as indicated by the two-headed arrow R3 in 704 of Fig. 7, in a case where the article W is inclined around the diagonal axis, among roll angles of the rolling axis R0 with respect to the X direction, Y direction, and Z direction, the roll angles with respect to the X direction, Y direction, and Z direction are generated. In other words, the roll angles with respect to the X direction, Y direction, and Z direction are respectively equal to the inclination angles Rx, Ry, and Rz detected in step S12. Further, the image processing part 15b outputs the inclination angles Rx, Ry, and Rz to the driving control part 15c as a tilting angle of the tilting shaft 122A. Thereafter, the driving control part 15c carries out tilting control for the tilting mechanism 122 so that a tilting angle represented by the inclination angles Rx, Ry, and Rz is attained.

Then, as illustrated in the drawing on the right side in 704 of Fig. 7, in a case where the image processing part 15b determines the first suction part 12a1 to the third suction part 12a3 as the sucked surface which is to be caused to suck the sucked surface WS, the driving control part 15c controls the driving part 12b so that a center position of the first suction part 12a1 to the third suction part 12a3 coincides with the gravity center position WL of the article W. In other words, the driving control part 15c causes a process for sucking the article W by the first suction part 12a1 to the third suction part 12a3 to be executed in a state where a center position of the base part 12a4 of the picking head 12a coincides with the gravity center position WL of the article W.

### (2) An example case in which two suction parts serve as a specific suction part

Fig. 8 is a view illustrating a specific example case where, among the first suction part 12a1 to the third suction part 12a3 shown in Fig. 4, two suction parts serving as the specific suction part are caused to suck the sucked surface WS of the article W.

In a case where the image processing part 15b determines, in the process in step S15, two of the first suction part 12a1 to the third suction part 12a3 as the specific suction part in accordance with a size of the sucked surface WS of the article W, the image processing part 15b further determines the specific suction part in the following procedure.

To be more specific, as illustrated in Fig. 8, the image processing part 15b determines, in the process in step S15, that the size of the sucked surface WS is smaller than a sum of suction areas of the first suction part 12a1 to the third suction part 12a3. Further, the image processing part 15b determines that the size of the sucked surface WS is larger than a sum of suction areas of arbitrary two of the suction parts.

Subsequently, the image processing part 15b obtains an angle α made by, among a longer side WN and a shorter side WM of the sucked surface WS, the longer side WN and a straight line L12, for example. The straight line L12 is a straight line passing through a center position of the first suction part 12a1 and a center position of the second suction part 12a2. Further, the image processing part 15b obtains an angle β made by the longer side WN and a straight line L13. The straight line L13 is a straight line passing through the center position of the first suction part 12a1 and a center position of the third suction part 12a3. Furthermore, the image processing part 15b obtains an angle γ made by the longer side WN and a straight line L23. The straight line L23 is a straight line passing through the center position of the second suction part 12a2 and the center position of the third suction part 12a3.

Moreover, the image processing part 15b makes a comparison between the angles α, β, and γ thus obtained, so as to obtain the angle α, which is a smallest angle. Then, the image processing part 15b determines, as the specific suction part, the first suction part 12a1 and the second suction part 12a2, which correspond to the angle α thus obtained. Thereafter, the driving control part 15c controls driving of the turning mechanism 121 for turning so that the orientation of the core T of the tilting shaft 122A and the orientation of the rolling axis R0 coincide with each other. Further, the driving control part 15c turns the turning mechanism 121 independently of a roll angle, which is a rolling angle of the rolling axis R0 with respect to the Z direction, that is, independently of the inclination angle Rz detected in step S12.

Furthermore, the image processing part 15b outputs the roll angle of the rolling axis R0, that is, the inclination angles Rx, Ry, and Rz detected in step S12 to the driving control part 15c as a tilting angle of the tilting shaft 122A. Thereafter, the driving control part 15c carries out tilting control for the tilting mechanism 122 so that a tilting angle represented by the inclination angles Rx, Ry, and Rz is attained.

Moreover, in a case where the first suction part 12a1 and the second suction part 12a2 are determined as the specific suction part, the driving control part 15c a process for causing the first suction part 12a1 and the second suction part 12a2 to suck the article W to be executed in a state where a center position of the first suction part 12a1 and the second suction part 12a2 coincides with the gravity center position WL of the article W. Note that, in a case where two suction parts are determined as the specific suction part, sucking operation by the two suction parts are carried out in a state where a center position of the two selected suction parts coincides with the gravity center position WL.

### (3) A case in which a specific suction part is changed

Fig. 9 is a view illustrating a specific example in which the specific suction part is changed. In Fig. 9, in the process in step S15, the image processing part 15b makes a comparison between (i) a size of an imaginary circumscribed quadrangle RT which circumscribes two or more suction parts selected from a plurality of suction parts and (ii) a size of the sucked surface WS. Then, if the circumscribed quadrangle RT has such a size that the circumscribed quadrangle RT can be included inside an outline of the sucked surface WS, the image processing part 15b determines the suction parts inside the circumscribed quadrangle RT as the specific suction part.

To be more specific, in the drawing on the left side in Fig. 9, the image processing part 15b makes a comparison between a size of a circumscribed quadrangle RT circumscribing the first suction part 12a1 and the second suction part 12a2 and a size of the sucked surface WS, for example. Then, if the size of the circumscribed quadrangle RT is smaller than the size of the sucked surface WS, that is, if the circumscribed quadrangle RT has such a size that the circumscribed quadrangle RT can be included inside an outline of the sucked surface WS, the image processing part 15b determines the first suction part 12a1 and the second suction part 12a2 as the specific suction part, as described above.

Meanwhile, as illustrated in the drawing on the left side in Fig. 9, if the image processing part 15b determines that the above-described circumscribed quadrangle RT has such a size that the circumscribed quadrangle RT cannot be included inside the outline of the sucked surface WS, the image processing part 15b determines that the first suction part 12a1 and the second suction part 12a2, which are included in the circumscribed quadrangle RT, cannot be selected as the specific suction part. In other words, the image processing part 15b determines that the two suction parts cannot be selected as the specific suction part. Then, the image processing part 15b makes a comparison between a size of a circumscribed quadrangle (not illustrated) of one suction part, for example, the first suction part 12a1 and the size of the sucked surface WS.

If the image processing part 15b determines that the size of the sucked surface WS is smaller than the size of the circumscribed quadrangle of the first suction part 12a1, then the image processing part 15b determines that it is impossible to carry out the transfer work for the article W. Then, the control section 15 notifies, via, e.g., a display part 16b, the worker S that it is impossible to carry out the transfer work for the article W.

Meanwhile, if the image processing part 15b determines that the size of the sucked surface WS is larger than the size of the circumscribed quadrangle of the first suction part 12a1, the image processing part 15b determines that it is possible to suck the article W by the first suction part 12a1 and determines the first suction part 12a1 as the specific suction part. Thereafter, as illustrated in the drawing on the right side in Fig. 9, the driving control part 15c controls driving of the turning mechanism 121 for turning so that orientation of the core T of the tilting shaft 122A and orientation of the rolling axis R0 coincide with each other. Further, the driving control part 15c turns the turning mechanism 121 independently of a roll angle, which is a rolling angle of the rolling axis R0 with respect to the Z direction, that is, independently of the inclination angle Rz detected in step S12.

Furthermore, the image processing part 15b outputs a roll angle of the rolling axis R0, that is, the inclination angles Rx, Ry, and Rz detected in step S12 to the driving control part 15c as a tilting angle of the tilting shaft 122A. Thereafter, the driving control part 15c carries out tilting control for the tilting mechanism 122 so that a tilting angle represented by the inclination angles Rx, Ry, and Rz is attained.

Moreover, in a case where the first suction part 12a1 is determined as the specific suction part, the driving control part 15c causes a process for sucking the article W by the first suction part 12a1 to be executed in a state where a center position of the first suction part 12a1 coincides with the gravity center position WL of the article W.

### (4) An example case in which one suction part serves as a specific suction part

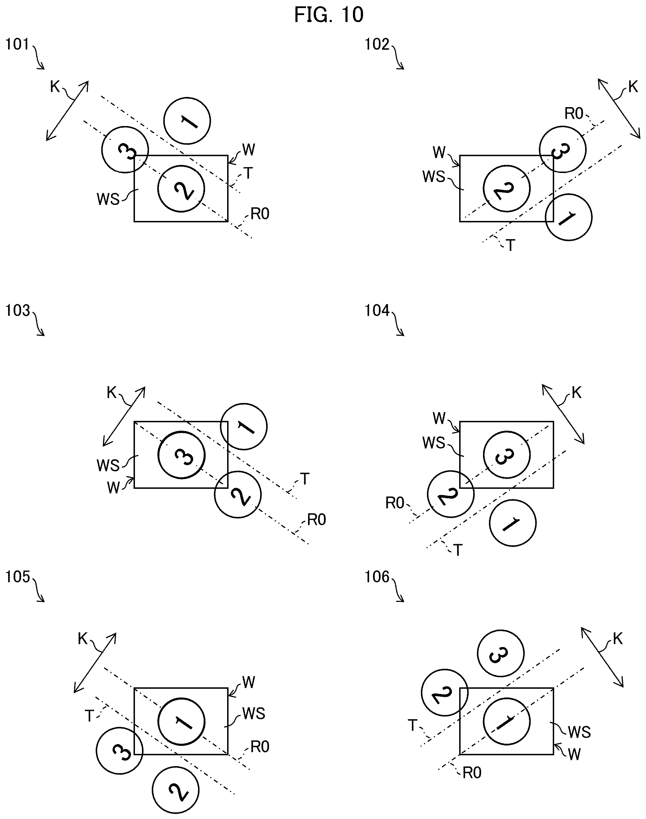

Fig. 10 is a view illustrating a specific example case where one suction part, serving as the specific suction part, is caused to suck the sucked surface WS of the article W.

As illustrated in 101 and 102 in Fig. 10, in a case where the image processing part 15b determines the second suction part 12a2 as the specific suction part, the driving control part 15c controls driving of the turning mechanism 121 for turning so that orientation of the core T of the tilting shaft 122A and orientation of the rolling axis R0 coincide with each other. Further, the driving control part 15c turns the turning mechanism 121 independently of a roll angle, which is a rolling angle of the rolling axis R0 with respect to the Z direction, that is, independently of the inclination angle Rz detected in step S12.

Furthermore, the image processing part 15b outputs the roll angle of the rolling axis R0, that is, the inclination angles Rx, Ry, and Rz detected in step S12 to the driving control part 15c as a tilting angle of the tilting shaft 122A. Thereafter, the driving control part 15c carries out tilting control for the tilting mechanism 122 so that a tilting angle represented by the inclination angles Rx, Ry, and Rz is attained.

Further, the driving control part 15c causes a process for sucking the article W by the second suction part 12a2 to be executed in a state where a center position of the second suction part 12a2 coincides with the gravity center position WL of the article W.

As illustrated in 103 and 104 in Fig. 10, in a case where the image processing part 15b determines the third suction part 12a3 as the specific suction part, the driving control part 15c controls driving of the turning mechanism 121 for turning so that orientation of the core T of the tilting shaft 122A and orientation of the rolling axis R0 coincide with each other. Further, the driving control part 15c turns the turning mechanism 121 independently of a roll angle, which is a rolling angle of the rolling axis R0 with respect to the Z direction, that is, independently of the inclination angle Rz detected in step S12.

Furthermore, the image processing part 15b outputs the roll angle of the rolling axis R0, that is, the inclination angles Rx, Ry, and Rz detected in step S12 to the driving control part 15c as a tilting angle of the tilting shaft 122A. Thereafter, the driving control part 15c carries out tilting control for the tilting mechanism 122 so that a tilting angle represented by the inclination angles Rx, Ry, and Rz is attained.

Further, the driving control part 15c causes a process for sucking the article W by the third suction part 12a3 to be executed in a state where a center position of the third suction part 12a3 coincides with the gravity center position WL of the article W.

As illustrated in 105 and 106 in Fig. 10, in a case where the image processing part 15b determines the first suction part 12a1 as the specific suction part, the driving control part 15c controls driving of the turning mechanism 121 for turning so that orientation of the core T of the tilting shaft 122A and orientation of the rolling axis R0 coincide with each other. Further, the driving control part 15c turns the turning mechanism 121 independently of a roll angle, which is a rolling angle of the rolling axis R0 with respect to the Z direction, that is, independently of the inclination angle Rz detected in step S12.

Furthermore, the image processing part 15b outputs the roll angle of the rolling axis R0, that is, the inclination angles Rx, Ry, and Rz detected in step S12 to the driving control part 15c as a tilting angle of the tilting shaft 122A. Thereafter, the driving control part 15c carries out tilting control for the tilting mechanism 122 so that a tilting angle represented by the inclination angles Rx, Ry, and Rz is attained.

Further, the driving control part 15c causes a process for sucking the article W by the first suction part 12a1 to be executed in a state where a center position of the first suction part 12a1 coincides with the gravity center position WL of the article W.

### Effects of Transfer System 1

As discussed above, the transfer system 1 in accordance with the present embodiment includes the picking head 12a including the first suction part 12a1 to the third suction part 12a3 configured to suck the article W. The transfer system 1 includes the driving part 12b configured to raise and lower the picking head 12a to move the picking head 12a in the X direction and the Y direction in a plan view, the driving part 12b including the turning mechanism 121 configured to turn the picking head 12a and the tilting mechanism 122 configured to tilt the picking head 12a around the tilting shaft 122A which is orthogonal to the turning shaft 121A of the turning mechanism 121. The transfer system 1 includes the camera part 13 configured to obtain image data of the article W and the image processing part 15b configured to detect a posture of the article W from the image data. The transfer system 1 includes the driving control part 15c configured to control the driving part 12b, the driving control part 15c being further configured to control the turning mechanism 121 so as to make the sucked surface WS of the article W and the tilting shaft 122A in parallel with each other.

With the above configuration, while causing the picking head 12a to approach the article W, the transfer system 1 in accordance with the present embodiment can adjust an angle of the picking head 12a so that at least one of the first suction part 12a1 to the third suction part 12a3 directly faces the sucked surface WS which is inclined, for example. Thus, the transfer system 1 in accordance with the present embodiment allows the article W to be appropriately held with the five-axis articulated robot.

Further, in the transfer system 1 in accordance with the present embodiment, the driving control part 15c controls the turning mechanism 121 so that the orientation of the tilting shaft 122A and the orientation of the rolling axis R0 coincide with each other. This makes it possible to simplify the structure of the transferring part 12, thereby leading to simplification of the structure of the transfer system 1. To be more specific, the picking head 12a can be provided with a turning structure for turning the base part 12a4 so as to turn the first suction part 12a1 to the third suction part 12a3 as appropriate to suck the article W. However, the transfer system 1 in accordance with the present embodiment is configured such that the driving control part 15c controls the turning mechanism 121 in the above-described manner; therefore, even without the above-described turning structure, the transfer system 1 in accordance with the present embodiment can turn the first suction part 12a1 to the third suction part 12a3 as appropriate to suck the article W by at least one of the suction parts.

The foregoing description has dealt with the case where a rolling axis R0 is set for every article W. However, the present is not limited to such a configuration, provided that the present invention is configured to control the turning mechanism 121 so as to make the sucked surface WS of the article W and the tilting shaft 122A in parallel with each other.

To be more specific, the present invention may be configured such that, for example, only in a case where inclination angles Rx and Ry detected in step S12 exceed a prescribed angle, a rolling axis R0 may be set for that article W and the turning mechanism 121 may be controlled so that orientation of the tilting shaft 122A and orientation of the rolling axis R0 coincide with each other. Further, in a case where the inclination angles Rx and Ry are not more than the prescribed angle, a rolling axis R0 is not set and an inclination angle Rz detected in step S12 is used as a tilting angle to carry out tilting control for the tilting mechanism 122. Then, the article W may be sucked by the specific suction part in a state where a center position of the specific suction part coincides with a gravity center position WL of the sucked surface WS.

Further, the foregoing description has dealt with the configuration in which the picking head 12a includes three suction parts, for example, the first suction part 12a1, the second suction part 12a2 and the third suction part 12a3, which can serve as the specific suction part. However, the picking head in accordance with the present invention is not limited to this. There is no particular limitation to the picking head, provided that it includes at least one suction part which can serve as the specific suction part.

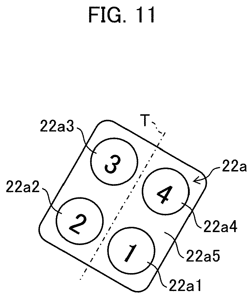

To be more specific, as illustrated in Fig. 11, a picking head 22a may include four suction parts, specifically, a first suction part 22a1, a second suction part 22a2, a third suction part 22a3, and a first suction part 22a4 as well as a base part 12a5. In Fig. 11, the first suction part 22a1, the second suction part 22a2, the third suction part 22a3, and the fourth suction part 22a4 are respectively illustrated as "1", "2", "3", and "4" for simplification.

### Software Implementation Example

The functions of the transfer system 1 (hereinafter referred to as a "device") can be realized by a program for causing a computer to function as the device, the program causing the computer to function as control blocks (particularly, the parts included in the control part 15) of the device.

In this case, the device includes a computer that has at least one control device (for example, a processor) and at least one storage device (for example, a memory) as hardware for executing the program. The control device and the storage device execute the program, so that the functions described in the above embodiments are realized.

The program can be stored in one or more non-transitory computer-readable recording media. The recording medium can be provided in the device, or the recording medium does not need to be provided in the device. In the latter case, the program can be supplied to the device via any wired or wireless transmission medium.

Some or all of the functions of the control blocks can be realized by a logic circuit. For example, an integrated circuit in which a logic circuit that functions as each of the control blocks is formed is also encompassed in the scope of the present invention. In addition, the function of each of the control blocks can be realized by, for example, a quantum computer.

Further, each of the processes described in the above embodiments can be executed by artificial intelligence (AI). In this case, the AI may be operated by the control device or may be operated by another device (for example, an edge computer and a cloud server).

Aspects of the present invention can also be expressed as follows:
A transfer system in accordance with a first aspect of the present invention includes: a picking head including at least one suction part configured to suck an article; a driving part configured to raise and lower the picking head and to move the picking head in two directions in a plan view, the driving part including a turning mechanism configured to turn the picking head and a tilting mechanism configured to tilt the picking head around a tilting shaft which is orthogonal to a turning shaft of the turning mechanism; a camera part configured to obtain image data of the article; an image processing part configured to detect a posture of the article from the image data; and a driving control part configured to control the driving part, the driving control part being further configured to control the turning mechanism so as to make a sucked surface of the article and the tilting shaft in parallel with each other.

With the above configuration, while causing the picking head to approach the article, it is possible to adjust an angle of the picking head so that the suction part directly faces the sucked surface which is inclined. Therefore, even in a case where the five-axis articulated robot is employed, it is possible to reliably suck the sucked surface of the article by the suction part.

A second aspect of the present invention is a transfer system in accordance with the first aspect which may be configured such that: the image processing part calculates a gravity center position of the article or a gravity center position of the sucked surface, and sets, as a rolling axis for the article, an axis which is orthogonal to an inclination direction of the article and which passes through the gravity center position; and the driving control part controls the turning mechanism so as to make orientation of the tilting shaft and orientation of the rolling axis coincide with each other.

With the above configuration, the driving control part controls the turning mechanism so that the orientation of the tilting shaft coincides with the orientation of the rolling axis passing through the gravity center position. Consequently, even in a case where the five-axis articulated robot is employed, it is possible to more appropriately adjust the angle of the picking head, thereby making it possible to reliably suck the sucked surface of the article by the suction part.

A third aspect of the present invention is a transfer system in accordance with the first or second aspect which may be configured such that: the at least one suction part included in the picking head includes a plurality of suction parts; in accordance with a size of the sucked surface, the image processing part determines, from among the plurality of suction parts, a specific suction part which is caused to suck the sucked surface; and the driving control part causes the specific suction part to suck the sucked surface.

With the above configuration, in a case where the plurality of suction parts are provided to the picking head, the image processing part determines the specific suction part in accordance with the size of the sucked surface. Further, the driving control part controls the turning mechanism so as to cause the specific suction part determined by the image processing part to suck the sucked surface. Consequently, even in a case where the five-axis articulated robot is employed, it is possible to reliably suck the sucked surface of the article by the specific suction part.

A fourth aspect of the present invention is a transfer system in accordance with the third aspect which may be configured such that: the image processing part determines the specific suction part by making a comparison between (i) a size of an imaginary circumscribed quadrangle circumscribing two or more suction parts selected from the plurality of suction parts and (ii) the size of the sucked surface.

With the above configuration, in a case where the plurality of suction parts are provided to the picking head, the image processing part determines the specific suction part by making a comparison between (i) the size of the imaginary circumscribed quadrangle circumscribing the two or more suction parts and (ii) the size of the sucked surface. With this, even in a case where the five-axis articulated robot is employed and the plurality of suction parts are provided to the picking head, it is possible to appropriately determine the specific suction part. Consequently, it is possible to more reliably suck the sucked surface of the article by the specific suction part.

A fifth aspect of the present invention is a transfer system in accordance with the fourth aspect which may be configured such that: in a case where the circumscribed quadrangle has such a size that the circumscribed quadrangle is included inside an outline of the sucked surface, the image processing part determines, as the specific suction part, the two or more suction parts inside the circumscribed quadrangle.

With the above configuration, in a case where the plurality of suction parts are provided to the picking head, if the image processing part determines that the circumscribed quadrangle has such a size that the circumscribed quadrangle can be included inside the outline of the sucked surface, the image processing part determines the suction part(s) inside the circumscribed quadrangle as the specific suction part. With this, even in a case where the five-axis articulated robot is employed and the plurality of suction parts are provided to the picking head, it is possible to more appropriately determine the specific suction part. Consequently, it is possible to more reliably suck the sucked surface of the article by the specific suction part.

A sixth aspect of the present invention is a transfer system in accordance with any one of the first to fifth aspects which may be configured such that: the at least one suction part included in the picking head includes a first suction part and a second suction part; and the first suction part and the second suction part are arranged such that the tilting shaft is sandwiched between the first suction part and the second suction part, in a case where the picking head is viewed from a direction of the raising and lowering.

With the above configuration, in the picking head, the first suction part and the second suction part are arranged such that the tilting shaft is sandwiched between the first suction part and the second suction part. Therefore, even in a case where the five-axis articulated robot is employed, it is possible to reliably suck the sucked surface of the article by at least one of the first suction part and the second suction part.

A seventh aspect of the present invention is a transfer system in accordance with the sixth aspect which may be configured such that: the at least one suction part included in the picking head further includes a third suction part; and the second suction part and the third suction part are arranged side by side along a direction in which the tilting shaft extends.

With the above configuration, the picking head is provided with the third suction part which is arranged side by side with the second suction part along the direction in which the tilting shaft extends. Consequently, even in a case where the five-axis articulated robot is employed, it is possible to reliably suck the sucked surface of the article by at least one of the first suction part, the second suction part, and the third suction part.

A method, in accordance with an eighth aspect of the present invention, for controlling a transfer system is a method for controlling a transfer system which includes (i) a picking head including at least one suction part configured to suck an article and (ii) a driving part configured to raise and lower the picking head and to move the picking head in two directions in a plan view, the driving part including a turning mechanism configured to turn the picking head and a tilting mechanism configured to tilt the picking head around a tilting shaft which is orthogonal to a turning shaft of the turning mechanism, the method including: an obtaining step of obtaining image data of the article; an image processing step of detecting a posture of the article from the image data; and a control step of controlling the turning mechanism so as to make a sucked surface of the article and the tilting shaft in parallel with each other. In this case, it is possible to achieve similar effects to those of the first aspect.

A transfer system and a control method therefor in accordance with each aspect of the present invention can be realized by a computer. In this case, the present invention encompasses: a control program for a transfer system, the control program causing a computer to function as each of the parts and steps (software elements) included in the transfer system and the control method therefor so as to realize, by the computer, the transfer system and the control method therefor; and a computer-readable recording medium having the control program stored therein.

The present invention is not limited to the embodiments, but can be altered by a skilled person in the art within the scope of the claims. The present invention also encompasses, in its technical scope, any embodiment derived by combining technical means disclosed in the embodiments.

### Reference Signs List

1: transfer system
12a: picking head
12a1: first suction part (specific suction part)
12a2: second suction part (specific suction part)
12a3: third suction part (specific suction part)
12b: driving part
22a: picking head
22a1: first suction part (specific suction part)
22a2: second suction part (specific suction part)
22a3: third suction part (specific suction part)
22a4: fourth suction part (specific suction part)
121: turning mechanism
121A: turning shaft
122: tilting mechanism
122A: tilting shaft
W: article
WS: sucked surface
WL: gravity center position
R0: rolling axis
RT: circumscribed quadrangle

## Claims

1. A transfer system comprising:
a picking head including at least one suction part configured to suck an article;
a driving part configured to raise and lower the picking head and to move the picking head in two directions in a plan view, the driving part including a turning mechanism configured to turn the picking head and a tilting mechanism configured to tilt the picking head around a tilting shaft which is orthogonal to a turning shaft of the turning mechanism;
a camera part configured to obtain image data of the article;
an image processing part configured to detect a posture of the article from the image data; and
a driving control part configured to control the driving part, the driving control part being further configured to control the turning mechanism so as to make a sucked surface of the article and the tilting shaft in parallel with each other.

2. The transfer system according to claim 1, wherein:
the image processing part calculates a gravity center position of the article or a gravity center position of the sucked surface, and sets, as a rolling axis for the article, an axis which is orthogonal to an inclination direction of the article and which passes through the gravity center position; and
the driving control part controls the turning mechanism so as to make orientation of the tilting shaft and orientation of the rolling axis coincide with each other.

3. The transfer system according to claim 1, wherein:
the at least one suction part included in the picking head comprises a plurality of suction parts;
in accordance with a size of the sucked surface, the image processing part determines, from among the plurality of suction parts, a specific suction part which is caused to suck the sucked surface; and
the driving control part causes the specific suction part to suck the sucked surface.

4. The transfer system according to claim 3, wherein:
the image processing part determines the specific suction part by making a comparison between (i) a size of an imaginary circumscribed quadrangle circumscribing two or more suction parts selected from the plurality of suction parts and (ii) the size of the sucked surface.

5. The transfer system according to claim 4, wherein:
in a case where the circumscribed quadrangle has such a size that the circumscribed quadrangle is included inside an outline of the sucked surface, the image processing part determines, as the specific suction part, the two or more suction parts inside the circumscribed quadrangle.

6. The transfer system according to any one of claims 1 to 5, wherein:
the at least one suction part included in the picking head comprises a first suction part and a second suction part; and
the first suction part and the second suction part are arranged such that the tilting shaft is sandwiched between the first suction part and the second suction part, in a case where the picking head is viewed from a direction of the raising and lowering.

7. The transfer system according to claim 6, wherein:
the at least one suction part included in the picking head further comprises a third suction part; and
the second suction part and the third suction part are arranged side by side along a direction in which the tilting shaft extends.

8. A method for controlling a transfer system which includes (i) a picking head including at least one suction part configured to suck an article and (ii) a driving part configured to raise and lower the picking head and to move the picking head in two directions in a plan view, the driving part including a turning mechanism configured to turn the picking head and a tilting mechanism configured to tilt the picking head around a tilting shaft which is orthogonal to a turning shaft of the turning mechanism, the method comprising:
an obtaining step of obtaining image data of the article;
an image processing step of detecting a posture of the article from the image data; and
a control step of controlling the turning mechanism so as to make a sucked surface of the article and the tilting shaft in parallel with each other.

9. A control program causing a computer to execute the obtaining step, the image processing step, and the control step each of which is included in a method, recited in claim 8, for controlling a transfer system.
